# FASCICULE DE BREVET EUROPEEN

(11) **EP 0 875 693 B1**
(45) Date de publication et mention de la délivrance du brevet: **10.03.2004**
(21) Numéro de dépôt: 98400985.2
(22) Date de dépôt: 22.04.1998
(51) Int. Cl.: F16F 9/46

(54) **Système d'amortissement réglable en continu**
Kontinuierlich regelbares Dämpfungssystem
Continuously-variable damping system

(30) Priorité: 24.04.1997 FR 9705089
(43) Date de publication de la demande: 04.11.1998
(73) Titulaire: AUTOMOBILES PEUGEOT, 75116 Paris (FR); AUTOMOBILES CITROEN, 92200 Neuilly-sur-Seine (FR)
(72) Inventeur: Abadie, Vincent, 92700 Colombes (FR)
(74) Mandataire: Bentz, Jean-Paul

(56) Documents cités:
- EP-A- 0 330 634
- EP-A- 0 508 466
- EP-A- 0 740 086
- DE-A- 4 401 689
- DE-C- 3 807 322

## Description

L'invention concerne un agencement d'amortissement des mouvements d'une masse par rapport à un support auquel elle est reliée par l'intermédiaire d'un dispositif de suspension pourvu d'au moins un ressort et de moyens d'amortissement hydrauliques, du type décrit dans le préambule de la revendication 1.

Le brevet DE 4401689 A décrit un agencement d'amortissement selon le préambule de la revendication 1.

La présente invention a pour but d'améliorer l'agencement selon l'état de la technique décrit dans ce document.

Pour atteindre ce but, l'agencement selon l'invention est caractérisé en ce qu'il comporte la caractéristique de la partie caractérisante de la revendication 1.

D'autres caractéristiques de l'invention sont décrites dans des revendications 2 à 12.

La présente invention a pour but de proposer un agencement qui ne présente pas les inconvénients susmentionnés et est miniaturisable.

Pour atteindre ce but, l'agencement selon l'invention est caractérisé entre autres en ce que le dispositif de laminage comprend, d'une part, un étage pilote comprenant les moyens de variation en continu des caractéristiques d'amortissement et à travers lequel est laminée une partie du débit de fluide et, d'autre part, un étage de puissance à travers lequel est laminée l'autre partie du débit de fluide.

Selon une autre caractéristique de l'invention, l'étage pilote comprend un corps creux, un tiroir creux mobile à l'intérieur du corps et parcouru axialement par la première partie de fluide, un dispositif formant clapet de fermeture et d'ouverture d'un orifice d'un canal d'écoulement de la première partie de fluide ainsi qu'un électro-aimant de commande de l'ouverture du dispositif formant clapet.

Selon encore une autre caractéristique de l'invention, le corps creux et le tiroir constituent également l'étage de puissance et comprennent des arêtes permettant le laminage entre elles de l'autre partie de fluide en fonction du déplacement du tiroir dans le corps creux.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
La figure 1 est une vue en perspective d'un agencement d'amortissement selon l'invention, pourvu de deux modules de laminage A et B.
La figure 2 est une vue en coupe le long de la ligne II-II de la figure 1.
La figure 3 est une vue en coupe le long de la ligne III-III de la figure 1.
La figure 4 est une vue à plus grande échelle du détail entouré en IV sur la figure 3.
Les figures 5 et 6 sont des vues schématiques des éléments de clapet indiqués respectivement en V et VI sur la figure 2.
Les figures 7A à 7C sont des vues schématiques latérales et de dessus respectivement, de l'élément indiqué en VII de la figure 2.
La figure 8 est un graphe illustrant le fonctionnement de l'agencement d'amortissement selon la présente invention.
La figure 9 illustre, de façon schématique, l'application de l'agencement d'amortissement selon l'invention à une suspension d'une roue de véhicule automobile.
La figure 10 montre, de façon schématique, par une vue en coupe, l'implantation d'un agencement d'amortissement selon l'invention dans le tube d'un amortisseur.
La figure 11 est une vue à plus grande échelle du détail de la figure 10, indiqué en XI.

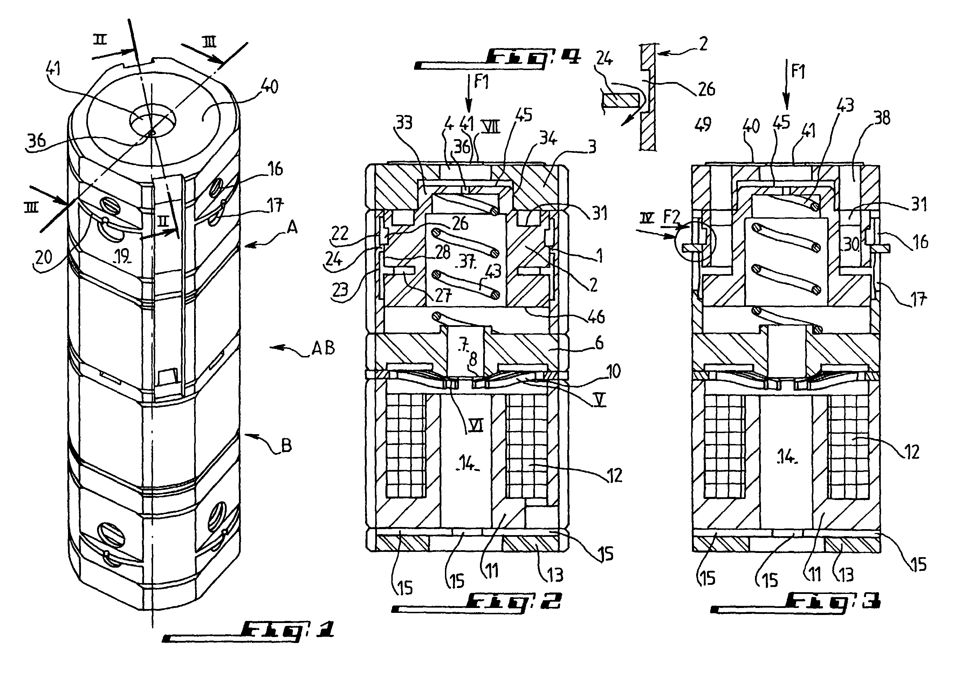

La figure 1 est une vue en perspective d'un agencement AB d'amortissement par laminage d'un fluide des mouvements d'une masse par rapport à un support auquel cette masse est reliée par l'intermédiaire d'un dispositif de suspension. Cet agencement comprend deux modules d'amortissement A et B qui sont montés tête-bêche. Les deux modules présentent la même structure.

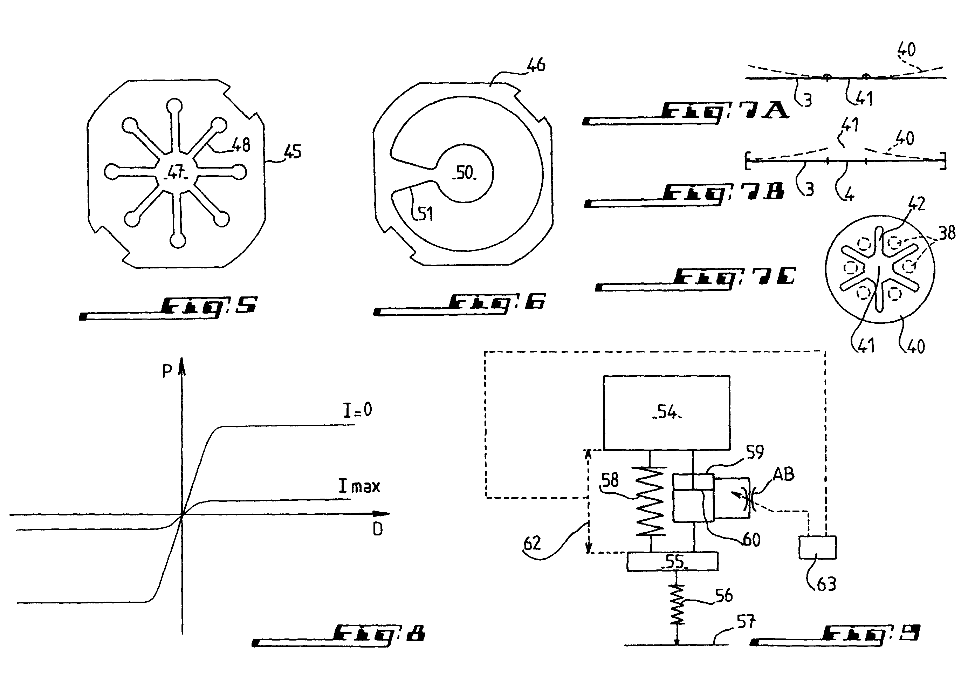

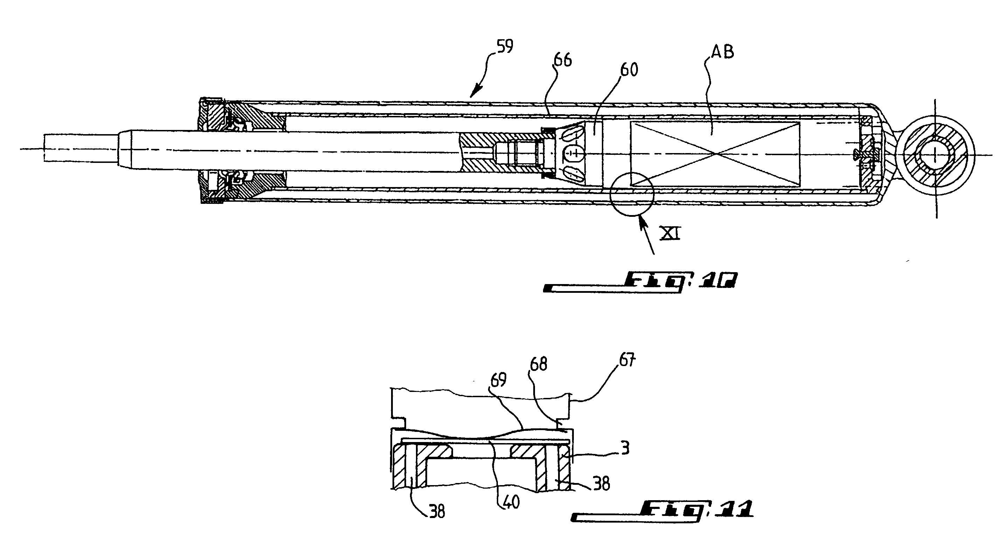

Les figures 2 et 3 sont des vues en coupe illustrant la structure du module A.

Conformément à ces figures, le module d'amortissement par laminage A comprend un corps creux 1 dans lequel coulisse un tiroir 2 et qui est pourvu à une extrémité d'un couvercle 3 comprenant un orifice 4 par lequel une partie du débit du fluide à laminer, indiquée par la flèche F1, s'écoule, et d'une plaque 6 appliquée à l'autre extrémité du corps. Cette plaque comprend un orifice central 7 et une base 8 au niveau de laquelle l'orifice 7 peut être obturé par un ensemble formant clapet 10. Le module A comprend en outre un dispositif d'électro-aimant formé par une carcasse 11 et un bobinage 12. L'électro-aimant du module A est isolé de celui du module B par une plaque isolante 13. Cette dernière et l'électro-aimant comportent un canal axial 14 qui communique avec l'orifice 7 de la plaque 6. La plaque isolante 13 comporte encore, du côté de la carcasse 11, des rainures radiales 15 ouvertes vers l'extérieur et vers le canal 14.

On constate en outre, notamment sur la figure 1, que le corps 1 comprend quatre paires d'orifices latéraux 16, 17. Les quatre paires sont disposées de façon angulairement équidistante autour de la périphérie du corps 1. La face extérieure de ce dernier comporte quatre méplats axiaux 19 dont chacun comporte une paire d'orifices 16 et 17 séparés par une nervure 20 qui fait saillie radialement et est formée par la périphérie du profil circulaire initial du corps 1.

Les orifices latéraux 16 et 17 communiquent respectivement avec des chambres annulaires 22, 23 pratiquées dans la face interne du corps 1. Ces deux chambres annulaires sont séparées par une partie de paroi annulaire 24.

Comme le montrent clairement les figures 2 et 3, le tiroir 2 qui est réalisé sous forme d'une pièce creuse, axialement mobile à l'intérieur du corps 1, comprend, dans sa face périphérique extérieure une rainure périphérique 26 et une gorge annulaire profonde 27. On constate que, dans la position axiale de repos du tiroir 8, qui est la position représentée aux figures 2 et 3, la rainure 26 et la gorge 27 du tiroir communiquent respectivement avec les chambres annulaires 22 et 23 du corps 1. Dans cette position, la portion en forme de nervure 24 qui sépare les deux chambres annulaires 22 et 23 du corps 1 est appliquée par sa face interne périphérique contre la portion périphérique 28 du tiroir, qui sépare la rainure 26 et la gorge 27 de ce dernier. Par contre, comme le montre la figure 4, lorsque le tiroir 2 se déplace en direction de la plaque 6, la nervure de séparation 24 du corps 1 se trouve en face de la rainure annulaire 26 du tiroir 2 si bien que les chambres annulaires 22 et 23 du corps 1, et ainsi les orifices latéraux 16 et 17 de ce dernier, communiquent à travers la rainure 26 du tiroir.

On constate, d'autre part, que le tiroir 2 comprend un certain nombre de canaux axiaux 30 qui débouchent à une extrémité dans la gorge profonde annulaire 27 et, par leur autre extrémité, dans une rainure annulaire 31 pratiquée dans la face frontale supérieure libre du tiroir.

Cette surface frontale porte un embout cylindrique 33 qui s'engage dans une cavité 34 de forme complémentaire pratiquée dans le couvercle 3. L'embout 33 est fermé mais est percé par un trou axial central 36 de sorte que l'espace interne indiqué en 37 du tiroir 2 soit en communication avec l'orifice d'arrivée 4 du couvercle.

Le couvercle comprend encore des canaux axiaux 38 qui communiquent avec la rainure 31 du tiroir 2 et sont ouvertes vers l'extérieur du côté de la face frontale libre du couvercle. Cette face est recouverte d'une plaque 40 constituant un clapet anti-retour qui présente un orifice central d'arrivée de fluide 41.

La figure 7 montre deux modes de fixation de cette plaque sur le couvercle. Sur la figure 7A, la plaque est fixée, par exemple par des rivets, sur le couvercle au niveau de l'orifice 41, tandis que, sur la figure 7B, la plaque est solidarisée avec le couvercle, par exemple par encastrement au niveau de son bord extérieur. Comme il ressort des figures, du fait que la plaque est très mince et présente par exemple une épaisseur de l'ordre de 0,1 mm, elle peut se soulever soit au niveau de son bord extérieur, soit au centre, sous l'effet du fluide s'écoulant à travers les canaux 30 du tiroir et 38 du couvercle. La figure 7C montre une configuration de la plaque 40, qui comporte des fentes radiales 42 entre deux ouvertures voisines de canaux 38. Les fentes partent de l'orifice 41. Les portions de la plaque délimitées par les fentes constituent des languettes flexibles qui recouvrent les ouvertures des canaux 38.

Il est encore à noter que le module d'amortissement comprend un ressort de rappel 43 destiné à repousser le tiroir 2 dans sa position de repos. Le ressort est interposé entre la paroi frontale interne 49 de l'embout 33 du tiroir et la plaque 6. Bien entendu, on pourrait aussi utiliser un ressort ou une pièce élastique interposé entre la plaque 6 et la face inférieure 46 du tiroir 2.

Concernant le dispositif formant clapet 10, il se compose d'un empilage de plaques 45 configurées de la manière représentée sur la figure 5 et d'une plaque supérieure 46 représentée schématiquement sur la figure 6. Chaque plaque 45 comporte un évidement central 47 et un certain nombre de fentes radiales 48 s'étendant à partir de l'évidement 47 en direction des bords de la plaque pour conférer à celle-ci la souplesse souhaitée. La plaque 46 présente une forme sensiblement annulaire, avec cependant une portion centrale restante 50 reliée au bord de la plaque par une barrette de liaison 51. La portion centrale est dimensionnée de façon à constituer un élément de clapet susceptible de s'appliquer contre la base 8 de la plaque 6.

Le module A qui vient d'être décrit fonctionne de la manière suivante. Une partie du fluide à laminer, indiquée par la flèche F1, s'écoule à travers l'orifice d'arrivée 4 du module, l'espace interne 37 du tiroir 2, le passage central 7 de la plaque 6 et le canal 14, en étant laminée sous l'effet de l'ensemble formant clapet de laminage 10 à la sortie de la plaque 6. L'électro-aimant 12 permet de faire varier, pour un même débit, la pression générée en amont de l'orifice d'arrivée 4. En effet, le tiroir 2 est soumis, entre sa face frontale amont 45 et ses faces frontales aval 46 et 49, à une différence de pression, donc à une force qui provoque son déplacement en direction de la plaque 6. Le déplacement du tiroir peut être modulé par l'attraction plus ou moins grande exerçée sur l'empilage des plaques 45 et 46 du dispositif formant clapet 10 par l'électro-aimant 12. Ainsi, ce déplacement est contrôlé par la tension ou le courant de commande appliqué à l'électro-aimant. Dans le cas d'une surpression, l'embout 33, en se dégageant de la cavité 45, libère un passage entre l'ouverture d'arrivée 4 et les orifices de sortie 17.

En plus de ce débit de fluide primaire F1 qui passe par l'orifice d'arrivée 4 du module de laminage et le tiroir 2 en déterminant la position axiale de ce dernier, une seconde partie F2 du fluide à laminer entre par les orifices latéraux 16 du module dans l'espace formé par les chambres 22 et 26 du corps 1 et du tiroir 2 et est laminée entre les arêtes correspondantes du tiroir et du corps pour passer dans la chambre 23 et ressortir par les orifices latéraux 17, comme cela ressort des figures 2, 3 et 4.

Dans l'agencement selon la figure 1 qui comporte les deux modules A et B de structure identique, mais montés tête-bêche, la partie de fluide F1 qui s'écoule à travers le tiroir 2 et le dispositif formant clapet 10 quitte ce module en passant à travers les rainures radiales 15. Ce fluide est alors amené à s'écouler le long du module inférieur B et pénètre dans celui-ci à travers les orifices 17. Il s'écoule ensuite à travers les canaux axiaux 30 du tiroir et les canaux 38 du couvercle 3 vers l'extérieur en soulevant la plaque 40 pour sortir soit au centre, soit à la périphérie de cette plaque, conformément aux deux possibilités représentées sur la figure 7. Quant à la deuxième partie de fluide F2 qui est entrée dans le module par les orifices latéraux 16 et sorties de celui-ci par les orifices 17, elle s'écoule le long de la face périphérique des modules A et B et rentre dans ce dernier par les orifices latéraux 17 pour ressortir au niveau de la plaque 40 qui se soulève, de la manière indiquée plus haut. Il est à noter que dans le cas où le débit du fluide est nul, le tiroir 2 est maintenu en butée contre le couvercle 3 par le ressort 43.

Cet arrangement permet de faire fonctionner les deux modules de laminage dans un seul sens. La commande des courants électriques dans les bobines 12 permet de contrôler dans chaque cas la perte de charge en fonction du débit.

La figure 8 donne les courbes et caractéristiques du fonctionnement en illustrant la relation entre la pression P et le débit D de laminage pour un courant I = 0 et un courant maximal Imax. Le module peut répondre jusqu'à une fréquence élevée, par exemple de l'ordre de 100 hertz. Un calculateur électronique peut alors commander de façon continue les courants d'excitation de l'électro-aimant 12 et ainsi procurer un amortissement continument variable.

La figure 9 illustre, à titre d'exemple, l'utilisation d'un agencement selon l'invention pour l'amortissement d'une suspension automobile. Les références 54 et 55 représentent respectivement les masses suspendues, c'est-à-dire la masse de la caisse du véhicule, et les masses non suspendues, c'est-à-dire la masse des roues et d'une partie de l'essieu. L'élément 56 symbolise les pneumatiques interposés entre la masse 55 et le sol 57. Le système de suspension, composé d'un ressort 58 et d'un système de déplacement de liquide 59 dont le piston est indiqué en 60 est interposé entre la masse suspendue 54 et la masse non suspendue 55. L'agencement d'amortissement AB selon l'invention est représenté sur la figure 9 à l'extérieur du système de déplacement de liquide 59. Mais il pourrait aussi être intégré au piston 60 de la manière représentée sur la figure 10.

Les figures 10 et 11 illustrent, à titre d'exemple, l'implantation de l'agencement d'amortissement AB selon la figure 1 dans le piston 60 mobile à l'intérieur du tube 66. Comme l'illustre la figure 11, pour que la plaque 40 puisse découvrir les canaux axiaux 38, elle est mobile en translation entre le couvercle 3 et une butée 68 du piston, à l'encontre d'une rondelle de rappel 69 interposée entre la butée 68 et la plaque. Bien entendu, la plaque pourrait être montée d'une autre manière, par exemple de la manière illustrée aux figures 7A et 7B.

Un capteur de déplacement symbolisé en 62 (figure 9) mesure le déplacement relatif entre la roue et la caisse et envoie l'information mesurée au calculateur indiqué en 63 qui en déduit la valeur de l'effort d'amortissement optimal à appliquer aux masses 54 et 55, par l'intermédiaire de l'agencement d'amortissement AB. Cette valeur est calculée de manière à permettre de filtrer au mieux les efforts transmis à la caisse tout en assurant une force de contact du pneumatique avec le sol qui soit maximale pour assurer la tenue de route du véhicule.

Le calcul de l'effort d'amortissement appliqué peut être réalisé suivant une loi CRONE (Commande Robuste d'Ordre Non Entier), selon laquelle l'effort est soit nul, soit proportionnel à une dérivée non entière du déplacement relatif entre la caisse et la roue. Une telle loi est décrite dans le brevet français N° 2 660 386.

Il est à noter que l'agencement d'amortissement selon l'invention peut être utilisé dans tout autre système de suspension d'une masse dans lequel un liquide est mis en mouvement et laminé pour créer un effort d'amortissement.

## Revendications

1. Agencement d'amortissement des mouvements d'une masse par rapport à un support auquel elle est reliée par l'intermédiaire d'un dispositif de suspension pourvu d'au moins un ressort et de moyens d'amortissement hydrauliques, ledit agencement comportant des moyens d'amortissement hydrauliques du type mettant en mouvement du fluide hydraulique et comprenant au moins un dispositif de laminage (AB) de ce fluide par au moins un orifice à travers lequel le fluide est amené à s'écouler, le dispositif de laminage (AB) comportant d'une part, un étage pilote comprenant des moyens de variation en continu (10, 12) des caractéristiques d'amortissement et à travers lequel est laminée une partie (F1) du débit de fluide et, d'autre part, un étage de puissance à travers lequel est laminée l'autre partie (F2) du débit de fluide, l'étage pilote comprenant un corps creux (1), un tiroir creux (2) mobile à l'intérieur du corps (1) et parcouru axialement par la première partie de fluide (F1), un dispositif formant clapet (10) de fermeture et d'ouverture d'un orifice (8) d'un canal (7) d'écoulement de la première partie de fluide (F1) ainsi qu'un électro-aimant (12) de commande de l'ouverture du dispositif formant clapet (10), le corps creux (1) et le tiroir (2) constituant également l'étage de puissance et comprenant des arêtes permettant le laminage entre elles de l'autre partie de fluide (F2) en fonction du déplacement du tiroir (2) dans le corps creux (1), **caractérisé en ce que** le dispositif formant clapet (10) comprend un empilement constitué d'une plaque (46) pourvue de moyens d'obturation élastique (50) de l'orifice (8) du canal d'écoulement (7) et d'une pluralité de plaques souples (45) dont le nombre varie en fonction de la souplesse souhaitée et qui comportent un canal de passage (47, 48), les plaques (45, 46) étant montées fixes à leur périphérie, l'attraction plus ou moins grande exercée sur l'empilement des plaques (45, 46) du dispositif formant clapet (10) par l'électro-aimant (12) modulant le déplacement du tiroir (2)

2. Agencement selon la revendication 1, **caractérisé en ce que** le corps creux (1) comprend des orifices latéraux (16, 17) traversant la paroi du corps et, pratiquées dans la paroi interne de celui-ci, des chambres annulaires (22, 23) séparées et susceptibles d'être mises en communication par une chambre (26) pratiquée dans la paroi périphérique extérieure du tiroir (2), en fonction de la position axiale de ce dernier.

3. Agencement selon l'une des revendications 1 ou 2, **caractérisé en ce qu'**il comprend des moyens de rappel (43) du tiroir (2) dans sa position de repos interdisant le passage du fluide à travers l'étage de puissance.

4. Agencement selon l'une des revendications 1 à 3, **caractérisé en ce qu'**il comprend des moyens (33) pour libérer, en cas de surpression, un passage pour la première partie de fluide (F1) entre l'ouverture d'arrivée (4) et les ouvertures latérales de sortie (17).

5. Agencement selon la revendication 4, **caractérisé en ce que** le tiroir (2) comprend une partie (33) d'obturation du passage vers les orifices de sortie (17), par engagement dans une cavité en communication avec l'orifice d'arrivée (4), l'engagement prenant fin lorsque le tiroir (2) s'est déplacé axialement au delà d'une distance prédéterminée.

6. Agencement selon l'une des revendications 1 à 5, **caractérisé en ce que** le tiroir (2) et le couvercle (3) du corps (1) sont percés par des canaux axiaux (30, 38) débouchant à une extrémité sur la face frontale d'arrivée et à l'autre extrémité dans les orifices latéraux de sortie (17), les sorties des canaux (30, 38) sur la face d'arrivée étant recouvertes d'un organe formant clapet anti-retour (40).

7. Agencement selon l'une des revendications 1 à 6, **caractérisé en ce qu'**un module de laminage comprend, en aval du dispositif formant clapet (10), des canaux radiaux (15) s'ouvrant, à une extrémité, vers l'extérieur dans la face périphérique du module et, à leur autre extrémité, dans l'espace interne (14) du module.

8. Agencement selon la revendication 7, **caractérisé en ce qu'**il comprend deux modules de laminage (A, B) montés tête-bêche dans un tube, et **en ce que** la première partie de fluide (F1) reçue à travers l'orifice d'entrée (4) d'un module (A,B) quitte ce module à travers les canaux radiaux (15), s'écoule le long de la périphérie de l'autre module (B, A), rentre dans celui-ci par les orifices latéraux de sortie (17) pour ressortir de ce module par les canaux axiaux (30, 38) en repoussant l'organe anti-retour (40), et **en ce que** la deuxième partie de fluide (F2) entrée dans le module (A,B) par les orifices latéraux d'entrée (16) et sortie par les orifices latéraux de sortie (17), rentre également par les orifices latéraux de sortie (17) de l'autre module (B,A) pour ressortir à travers les canaux (30, 38) sur la face d'arrivée de l'autre module (B,A).

9. Agencement selon la revendication 8, **caractérisé en ce que** l'autre module (B,A) peut servir de module d'arrivée du fluide, le module (A,B) constituant alors le module de sortie du fluide.

10. Agencement selon l'une des revendications précédentes, **caractérisé en ce que** la force d'amortissement est déterminée selon une loi du type CRONE, c'est-à-dire du type Commande Robuste d'Ordre Non Entier.

11. Système de suspension, notamment de véhicule automobile, du type à ressorts (58) et à système de déplacement de liquide (59), avantageusement à piston (60), monté entre la caisse (54) du véhicule et le support (55) formés par la roue et une partie de l'essieu, **caractérisé en ce qu'**un agencement d'amortissement selon l'une des revendications 1 à 11 est associé au système de déplacement de liquide (59).

12. Système de suspension selon la revendication 11, **caractérisé en ce que** l'agencement d'amortissement (AB) est monté sur le système (59), le cas échéant, intégré au piston (60) de celui-ci.

## Claims

1. Arrangement for damping the movements of a mass in relation to a support to which said mass is connected by means of a suspension device provided with at least one spring and hydraulic damping means, said arrangement including hydraulic damping means of the type setting hydraulic fluid in motion and comprising at least one device (AB) for wiredrawing this fluid through at least one orifice through which the fluid is induced to flow, the wiredrawing device (AB) having, on the one hand, a pilot stage comprising means (10, 12) for continuously varying the damping characteristics and through which a portion (F1) of the fluid flow is wiredrawn and, on the other hand, a power stage through which the other portion (F2) of the fluid flow is wiredrawn, the pilot stage comprising a hollow body (1), a hollow slide-valve (2) which is movable inside the body (1) and through which the first portion of fluid (F1) travels in axial direction, a device forming a valve (10) for closing and opening an orifice (8) in a flow channel (7) for the first portion of fluid (F1) as well as an electromagnet (12) for controlling the opening of the device forming the valve (10), the hollow body (1) and the slide-valve (2) also constituting the power stage and having edges allowing the other portion of fluid (F2) to be wiredrawn between said edges as a function of the displacement of the slide-valve (2) in the hollow body (1), **characterized in that** the device forming the valve (10) comprises a stack consisting of a plate (46), provided with flexible means (50) for sealing off the orifice (8) of the flow channel (7), and a plurality of flexible plates (45) of which the number varies as a function of the desired flexibility and which have a through channel (47, 48), the plates (45, 46) being mounted so as to be fixed at their periphery, the attraction of more or less magnitude exerted on the stack of plates (45, 46) of the device forming the valve (10) by the electromagnet (12) modulating the displacement of the slide-valve (2).

2. Arrangement according to Claim 1, **characterized in that** the hollow body (1) has lateral orifices (16, 17) extending through the wall of the body and, made in the inside wall of the latter, separate annular chambers (22, 23) which are capable of being brought into communication with one another by means of a chamber (26) made in the outer peripheral wall of the slide-valve (2), as a function of the axial position of the latter.

3. Arrangement according to one of Claims 1 or 2, **characterized in that** it includes means (43) for returning the slide-valve (2) to its rest position preventing the fluid from passing through the power stage.

4. Arrangement according to one of Claims 1 to 3, **characterized in that** it includes means (33) for opening up, in the event of overpressure, a passage for the first portion of fluid (F1) between the inlet (4) and the lateral outlets (17).

5. Arrangement according to Claim 4, **characterized in that** the slide-valve (2) includes a portion (33) for sealing off the passage to the outlets (17) by engaging in a cavity communicating with the inlet (4), the engagement coming to an end when the slide-valve (2) has moved more than a predetermined distance in axial direction.

6. Arrangement according to one of Claims 1 to 5, **characterized in that** axial channels (30, 38) pass through the slide-valve (2) and the cover (3) of the body (1) and emerge at one end on the front inlet face and at the other end in the lateral outlets (17), the outlets of the channels (30, 38) on the inlet face being covered by a member forming a non-return valve (40).

7. Arrangement according to one of Claims 1 to 6, **characterized in that**, downstream of the device forming the valve (10), one wiredrawing module has radial channels (15) which, at one end, open outwards in the peripheral face of the module and, at their other end, open into the inner space (14) of the module.

8. Arrangement according to Claim 7, **characterized in that** it comprises two wiredrawing modules (A, B) mounted head to foot in a tube, and **in that** the first portion of fluid (F1) received through the inlet (4) of one module (A, B) leaves this module through the radial channels (15), flows along the periphery of the other module (B, A), re-enters the latter through the lateral outlets (17) to re-emerge from this module through the axial channels (30, 38) by pushing back the non-return member (40), and **in that** the second portion of fluid (F2) which entered the module (A, B) through the lateral inlets (16) and emerged through the lateral outlets (17), likewise re-enters through the lateral outlets (17) of the other module (B, A) to re-emerge through the channels (30, 38) on the inlet face of the other module (B, A).

9. Arrangement according to Claim 8, **characterized in that** the other module (B, A) can serve as fluid-inlet module, the module (A, B) then constituting the fluid-outlet module.

10. Arrangement according to one of the preceding claims, **characterized in that** the damping force is determined according to a law of the CRONE type, i.e. of the Non-integer Order Robust Control type.

11. Suspension system, specifically for a motor vehicle, of the type with springs (58) and with a fluid-displacement system (59), advantageously with piston (60), mounted between the bodywork (54) of the vehicle and the support (55) formed by the wheel and a part of the axle, **characterized in that** a damping arrangement according to one of Claims 1 to 10 is associated with the fluid-displacement system (59).

12. Suspension system according to Claim 11, **characterized in that** the damping arrangement (AB) is mounted on the system (59), if necessary, integrated into the piston (60) of the latter.

## Patentansprüche

1. Anordnung zur Dämpfung der Bewegungen einer Masse relativ zu einem Träger, mit dem sie über eine Aufhängungsvorrichtung verbunden ist, die mit mindestens einer Feder und mit hydraulischen Dämpfungsmitteln versehen ist, wobei die genannte Anordnung hydraulische Dämpfungsmittel von der Art aufweist, die Hydraulikmedium in Bewegung versetzen und mindestens eine Drosselvorrichtung (AB) zum Drosseln dieses Fördermediums durch zumindest eine Öffnung enthalten, durch die hindurch das Fördermedium zum Abfließen gebracht wird, wobei die Drosselvorrichtung (AB) einerseits eine Vorstufe enthält, die Mittel (10, 12) zur stufenlosen Änderung der Dämpfungseigenschaften aufweist, und durch die hindurch ein Teil (F1) des Mediumförderstroms gedrosselt wird, und andererseits eine Leistungsstufe, durch die der andere Teil (F2) des Mediumförderstroms gedrosselt wird, wobei die Vorstufe einen Hohlkörper (1), einen innerhalb des Körpers (1) verlagerbaren und axial vom ersten Teil (F1) des Fördermediums durchflossenen Hohlschieber (2), eine Ventilvorrichtung (10) zum Schließen und Öffnen einer Öffnung (8) eines Strömungskanals (7) für den ersten Teil (F1) des Fördermediums sowie einen Elektromagneten (12) zum Steuern des Öffnens der Ventilvorrichtung (10) enthält, wobei der Hohlkörper (1) und der Schieber (2) auch die Leistungsstufe bilden und Kanten enthalten, weiche zwischen einander die Drosselung des anderen Teils (F2) des Fördermediums in Abhängigkeit von der Verlagerung des Schiebers (2) im Hohlkörper (1) gestatten, **dadurch gekennzeichnet, dass** die Ventilvorrichtung (10) ein Paket aus einer Platte (46) mit Mitteln (50) zum elastischen Absperren der Öffnung (8) des Strömungskanals (7) und aus einer Mehrzahl von nachgiebigen Platten (45) besteht, deren Anzahl je nach gewünschter Nachgiebigkeit variiert, und die einen Durchgangskanal (47, 48) enthalten, wobei die Platten (45, 46) an ihrem Umfang fest montiert sind, wobei die durch den Elektromagneten (12) auf das Plattenpaket (45, 46) der Ventilvorrichtung (10) ausgeübte, mehr oder weniger große Anziehungskraft die Verlagerung des Schiebers (2) moduliert.

2. Anordnung nach Anspruch 1, **dadurch gekennzeichnet, dass** der Hohlkörper (1) seitliche Öffnungen (16, 17) aufweist, welche die Wand des Körpers und aufgrund ihrer Ausbildung in der Innenwand desselben Ringkammern (22, 23) durchsetzen, die voneinander getrennt sind und über eine in der äußeren Umfangswand des Schiebers (2) ausgebildete Kammer (26) je nach axialer Stellung des Schiebers in Verbindung gebracht werden können.

3. Anordnung nach Anspruch 1 oder 2, **dadurch gekennzeichnet, dass** sie Mittel (43) zum Rückstellen des Schiebers (2) in seine Ruhestellung enthält, in welcher der Durchtritt des Fördermediums durch die Leitungsstufe unterbunden ist.

4. Anordnung nach einem der Ansprüche 1 bis 3, **dadurch gekennzeichnet, dass** sie Mittel (33) enthält, um bei Überdruck einen Durchgang für den ersten Teil (F1) des Fördermediums zwischen der Zulauföffnung (4) und den seitlichen Ablauföffnungen (17) freizugeben.

5. Anordnung nach Anspruch 4, **dadurch gekennzeichnet, dass** der Schieber (2) einen Abschnitt (33) zum Absperren des Durchgangs zu den Ablauföffnungen (17) durch Eingreifen in einen mit der Zulauföffnung (4) in Verbindung stehenden Hohlraum enthält, wobei das Eingreifen beendet wird, wenn der Schieber (2) sich axial über einen vorbestimmten Abstand hinaus verlagert hat.

6. Anordnung nach einem der Ansprüche 1 bis 5, **dadurch gekennzeichnet, dass** der Schieber (2) und der Deckel (3) des Körpers (1) von axial verlaufenden Kanälen (30, 38) durchsetzt sind, die mit einem Ende an der Zulaufstirnseite und mit dem anderen Ende in die seitlichen Ablauföffnungen (17) münden, wobei die Ausgänge der Kanäle (30, 38) an der Zulaufseite von einem Rückschlagventilglied (40) abgedeckt werden.

7. Anordnung nach einem der Ansprüche 1 bis 6, **dadurch gekennzeichnet, dass** ein Drosselmodul der Ventilvorrichtung (10) nachgelagert radial verlaufende Kanäle (15) enthält, die sich an einem Ende nach außen zur Umfangsfläche des Moduls und an ihrem anderen Ende zum Innenraum (14) des Moduls hin öffnen.

8. Anordnung nach Anspruch 7, **dadurch gekennzeichnet, dass** sie zwei Drosselmodule (A, B) enthält, die gegengleich in einem Rohr gelagert sind, und dass der erste Teil (F1) des Fördermediums, der durch die Zulauföffnung (4) eines Moduls (A, B) aufgenommen ist, dieses Modul durch die radial verlaufenden Kanäle (15) verlässt, entlang des Umfangs des anderen Moduls (B, A) strömt, in dieses durch die seitlichen Ablauföffnungen (17) eintritt, um über die axial verlaufenden Kanäle (30, 38) aus diesem Modul auszuströmen und dabei das Rückschlagventilglied (40) zurückzuschieben, und dass der durch die seitlichen Zulauföffnungen (16) in das Modul (A, B) eingeströmte und durch die seitlichen Ablauföffnungen (17) ausgeströmte zweite Teil (F2) des Fördermediums auch über die seitlichen Ablauföffnungen (17) des anderen Moduls (B, A) einströmt, um durch die Kanäle (30, 38) auf der Zulaufseite des anderen Moduls (B, A) auszuströmen.

9. Anordnung nach Anspruch 8, **dadurch gekennzeichnet, dass** das andere Modul (B, A) als Mediumzulaufmodul dienen kann, wobei das Modul (A, B) somit das Mediumablaufmodul bildet.

10. Anordnung nach einem der vorangehenden Ansprüche, **dadurch gekennzeichnet, dass** die Dämpfungskraft gemäß einer Gesetzmäßigkeit von der Art fester Steuerung nicht ganzzahliger Ordnung ("CRONE") bestimmt ist.

11. Federungssystem insbesondere für Kraftfahrzeuge, vom Typ mit Federn (58) und mit einer Flüssigkeitsfördereinrichtung (59), vorteilhaft mit einem Kolben (60), die zwischen dem Fahrzeugaufbau (54) und dem Träger (55) angebracht ist, der aus dem Fahrzeugrad und einem Teil der Achse gebildet ist, **dadurch gekennzeichnet, dass** einer Dämpfungsanordnung nach einem der Ansprüche 1 bis 10 die Flüssigkeitsfördereinrichtung (59) zugeordnet ist.

12. Federungssystem nach Anspruch 11, **dadurch gekennzeichnet, dass** die Dämpfungsanordnung (AB) an der Fördereinrichtung (59) montiert und gegebenenfalls im Kolben (60) derselben integriert ist.
